Europäisches Patentamt

European Patent Office

Office européen des brevets

(11) Veröffentlichungsnummer: **0 154 774 B1**

(12) **EUROPÄISCHE PATENTSCHRIFT**

(45) Veröffentlichungstag der Patentschrift: **24.06.92**

(21) Anmeldenummer: **85100534.8**

(22) Anmeldetag: **19.01.85**

(51) Int. Cl.5: **H04Q 9/14**, H04L 12/28, G06F 13/42

(54) **Datenübertragung mit bidirektionalem Datenbus.**

(30) Priorität: **10.02.84 DE 3404721**

(43) Veröffentlichungstag der Anmeldung:
**18.09.85 Patentblatt 85/38**

(45) Bekanntmachung des Hinweises auf die
Patenterteilung:
**24.06.92 Patentblatt 92/26**

(84) Benannte Vertragsstaaten:
**AT CH DE FR GB IT LI NL SE**

(56) Entgegenhaltungen:
**GB-A- 1 221 964**

**PATENT ABSTRACTS OF JAPAN, Band 6, Nr.
103 (E-112)[981], 12. Juni 1982; & JP-A-57 35
446**

**PATENT ABSTRACTS OF JAPAN, Band 6, Nr.
136 (E-120)[1014], 23. Juli 1982; & JP-A-57 61
362**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Gleim, Günter
Terra-Wohnpark 8
W-7730 Villingen-Schwenningen 24(DE)**
Erfinder: **Rufray, Jean-Claude
Hans-Thoma-Strasse 6
W-7734 Brigachtal(DE)**

EP 0 154 774 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einer Datenübertragung zwischen einer Steuereinheit und über eine Clockleitung, eine Freigabeleitung und eine Datenleitung an diese angeschalteten einzeln adressierbaren Peripheriebausteinen zur Durchführung der von der Steuereinheit ausgegebenen Befehle und zur Rückmeldung von Daten an die Steuereinheit über einen bidirektional arbeitenden Datenbus, wobei die Adressierung der Peripheriebausteine über die unterschiedliche Wortlänge der Daten erfolgt.

Bekanntlich findet zwischen einer Steuereinheit, wie z.B. einem Mikroprozessor, und den an diesen angeschalteten peripheren Bausteinen in Form von integrierten Schaltungen zur Ausführung der von der Steuereinheit abgegebenen Befehle ein ständiger Datenfluß statt. Die Steuereinheit verlangt dabei oftmals eine Rückmeldung von dem durch diese angesprochenen Schaltkreise, so daß der Datenfluß auf der Datenleitung in beiden Richtungen möglich sein muß.

Es ist eine Anordnung bekannt (siehe Patent Abstracts of Japan, Band 6, Nr.136 (E-120) [1014], 23. Juli 1982; & JP-A-57 61 362), bei der mehrere von einem Mikroprozessor adressierbare integrierte Schaltungen mit Daten über eine Datenleitung beaufschlagt werden. Hierbei handelt es sich um ein System mit konstanter Wortlänge für die Adressierung, Datenübermittlung und für den Befehl zur Rückmeldung von Daten in umgekehrter Richtung. Durch die konstante Wortlänge z.B. 8 Bit bei einem 8-Bit-System ergeben sich sehr lange Befehle, für deren Übermittlung entsprechend viel Zeit beansprucht wird. So benötigt man z.B. für die Adressierung, für die Daten und für den Befehl zur Rückmeldung je 8 Bit. Insbesondere für den letztgenannten Befehl macht sich die unnötig große Wortlänge nachteilig bemerkbar, da systembedingt 8 Bit übertragen werden müssen, obwohl ein einziges Bit genügen würde.

Es ist außerdem ein Datenübertragungssystem bekannt, bei welchem mit variabler Wortlänge gearbeitet wird und die Adressierung der Peripheriebausteine über die ermittelte Wortlänge erfolgt. Jedoch ist bei diesem Datenübertragungssystem kein bidirektionaler Datenbus vorgesehen.

Der Erfindung liegt die Aufgabe zugrunde, eine bidirektionale Datenübertragung zwischen einer Steuereinheit und mehreren an diese angeschalteten Peripheriebausteinen zu ermöglichen, ohne auf der Datenleitung einen besonderen Befehl dafür vorzusehen. Die Erfindung bringt den Vorteil, daß die Datenübertragung besonders schnell wird, da die Zeit zur Übermittlung eines besonderen Befehls eingespart wird, weil der Befehl aus den Steuersignalen der Steuereinheit abgeleitet wird. Die der Erfindung zugrunde liegende Aufgabe wird durch die im Patentanspruch offenbarte Erfindung gelöst. Weitere vorteilhafte Möglichkeiten zur Anwendung der Erfindung ergeben sich aus den Unteransprüchen.

Nachstehend soll die Erfindung an einem Ausführungsbeispiel mit Hilfe der Zeichnung erläutert werden, wobei in

Figur 1

ein die Erfindung beschreibendes Blockschaltbild und die

Figuren 2 bis 4

Beispiele für die Datenübertragung zeigen.

Mit 1 ist die Steuereinheit, z.B. ein Mikroprozessor, gezeigt, der mit Peripheriebausteinen 2, 3, 4 und 5 korrespondiert. Der Mikroprozessor 1 besitzt einen mit DATA bezeichneten Anschluß, über welchen Daten an die Peripheriebausteine 2 bis 5 abgegeben und von diesen über die bidirektionale Datenleitung empfangen werden können. Der EN-Ausgang aktiviert die einzelnen Bausteine 2 bis 5 und synchron mit dem Clock-Signal CL werden die Daten transferiert. Jeder Baustein 2 bis 5 besitzt einen Zähler 8 bzw. 9. Die Adressierung der Bausteine erfolgt dadurch, daß über den nach der Dateneingabe auf H-Potential liegenden EN-Eingang in Koinzidenz mit dem auf H-Potential liegenden Zählerausgang ein Signal zur Übernahme der Daten in dem entsprechenden Baustein abgeleitet wird. Die Ausgänge Z1, Zn liefern Signale nach verschiedener Anzahl von Clock-Impulsen CL. Auf diese Weise sind je nach Wortlänge der Daten verschiedenen Bausteine adressierbar. Die im Auffangregister 6, 7 gespeicherten Daten liegen an den Eingängen von Arbeitsspeichern 16 und 17 (Latch) die je nach Koinzidenz der Ausgangssignale der Zähler 8 bzw. 9 mit dem EN-Signal die Daten übernehmen und an die Ausgänge legen. Mit Auftreten des EN-Signals mit L-Potential werden sämtliche Zähler zurückgesetzt. Unmittelbar nach der Datenausgabe von der Steuerschaltung 1 wird über die Und-Schaltung 10 bzw. 11 eine bistabile Kippstufe, hier als R-S-Flip-Flop 12 bzw. 13 dargestellt, gesetzt, deren Ausgangssignale den Antwortspeicher 14 bzw. 15 aktivieren, der bei Eintreffen von Clockimpulsen CL die Daten an die Steuereinheit 1 ausgibt. Sobald das EN-Signal bei Eintreffen von Daten aus der Steuereinheit 1 auf Null-Potential liegt, wird das Flip-Flop 12 bzw. 13 wieder zurückgesetzt und der Datenfluß aus dem Antwortregister 14 bzw. 15 unterbunden.

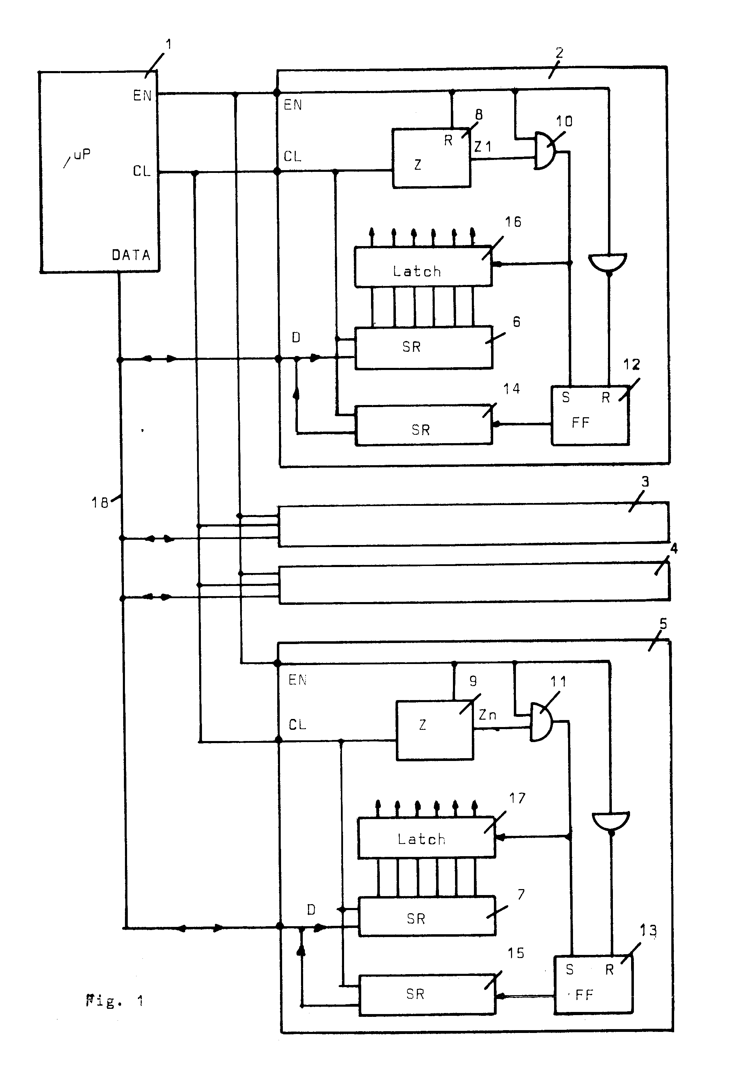

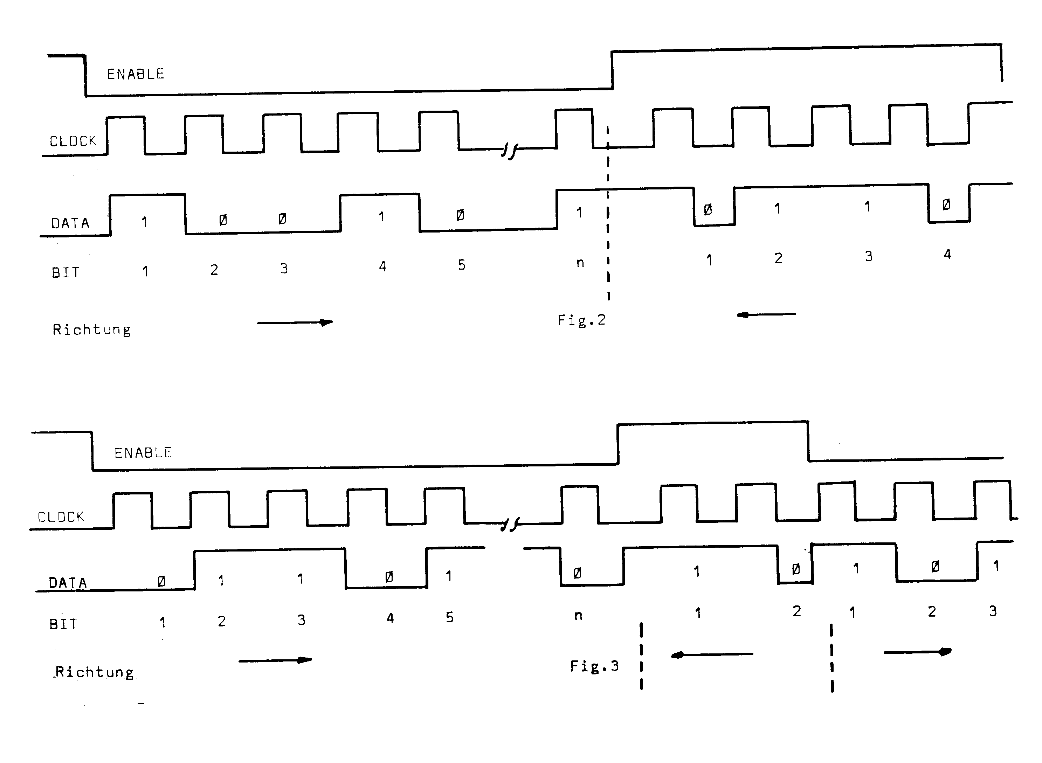

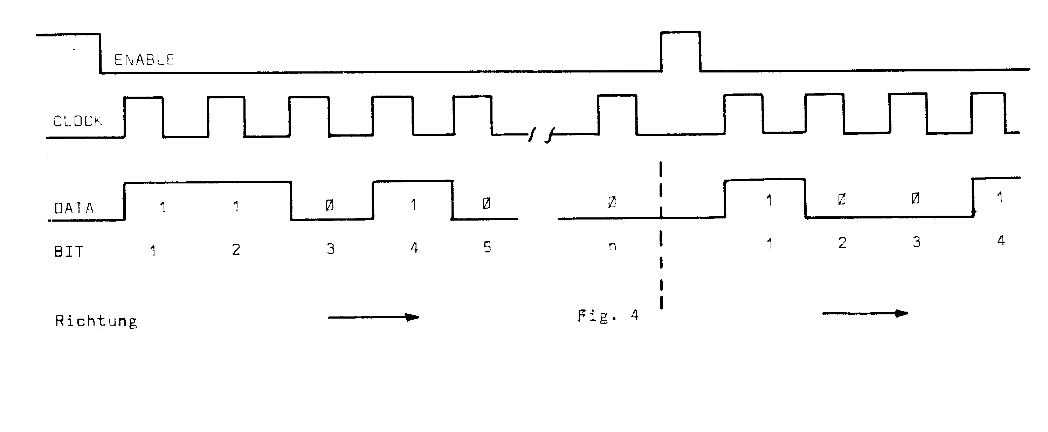

Mit Hilfe der nachfolgenden Figuren 2 bis 4 werden verschiedene Arten des Daten flußes beschrieben.

In Figur 2 ist der Fall gezeigt, daß Daten von der Steuereinheit 1 an den Dateneingängen der Peripheriebausteine 2 bis 5 anliegen. Nach dem n-ten Clockimpuls liegt ein n-Bit-Wort in den Auffangregistern der Bausteine 2 bis 5. Der Baustein n, dessen Zähler auf den Wert n eingestellt ist, übernimmt die Daten in seinen Arbeitsspeicher.

Der zu adressierende Baustein wird mit Hilfe der positiven Flanke des EN-Signals bestimmt. Unmittelbar nach dieser Flanke gelangen synchron Zum Clocksignal die Bits der Antwort auf die Datenleitung 18 zur Steuereinheit 1.

In Fall von Figur 3 sei für die Steuereinheit 1 nur der Wert des erten und zweiten Datenbits für die Rückmeldung wichtig. Durch das EN-Signal kann somit die Antwort sofort nach Eintreffen des zweiten Bits unterbunden werden. Dies hat den Vorteil, daß die Steuereinheit 1 sofort neue Daten senden kann, wodurch Zeit gespart wird.

Nach Figur 4 ist keine Antwort erforderlich. Der Datenfluß in umgekehrter Richtung wird völlig unterdrückt, indem das EN-Signal nach Eintreffen und Verarbeiten des ersten Wortes sofort wieder auf niedriges Potential geht, so daß unmittelbar das nächstfolgende Wort von der Steuereinheit 1 auf die Datenleitung 18 gegeben wird. Dieses bringt den Vorteil, daß bei Befehlen, die keine Antwort für die Steuereinheit benötigen, keine zusätzliche Zeit verloren geht. Somit ist die Datenleitung sofort frei für die Übermittlung von Daten aus der Steuereinheit.

## Patentansprüche

1. Schaltungsanordnung zur Übertragung von Daten von einer Steuereinheit zu über einen Datenbus mit dieser verbundenen einzeln adressierbaren Peripheriebausteinen, wobei die Adressierung der Peripheriebausteine über die unterschiedliche Wortlänge der Daten erfolgt und die Peripheriebausteine ein Auffangregister (6,7) und einen Adreßdecoder sowie je einen Arbeitsspeicher und ein Antwortregister besitzen, aus welchen Daten über dieselben Datenleitungen desselben Datenbusses von dem adressierten Peripheriebaustein an die Steuereinheit gelangen, **dadurch gekennzeichnet**, daß unmittelbar vom Adreßdecoder (8, 9) des adressierten Peripheriebausteins (2, 5) ein Steuersignal zur Vorbereitung des Datenflußes von dem adressierten Peripheriebaustein zur Steuereinheit (1) abgeleitet wird, das nur in Koinzidenz mit einem von der Steuereinheit (1) abgegebenen Steuersignal (EN) das Antwortregister (14, 15) freigibt, und daß die Länge des Steuersignals (EN) zur Steuerung der Dauer des Datenflußes zur Steuereinheit (1 variabel ist.

## Claims

1. Circuit arrangement for the transmission of data from a control unit to individually addressable peripheral devices connected to the latter via a data bus, in which the addressing of the peripheral devices takes place by means of the differing word length of the data and the peripheral devices possess a receiving register (6,7) and an address decoder together in each case with a main memory and a response register, out of which main memory and response register data reach the control unit from the addressed peripheral device via the same data lines of the same data bus, characterised in that there is obtained directly from the address decoder (8,9) of the addressed peripheral device (2,5), for the preparation of the data flow from the addressed peripheral device to the control unit (1), a control signal which enables the response register (14,15) only in coincidence with a control signal (EN) emitted by the control unit (1), and that the length of the control signal (EN) for controlling the duration of the data flow to the control unit (1) is variable.

## Revendications

1. Dispositif de circuit pour la transmission de données d'une unité de commande à des éléments périphériques adressables séparément, reliés à celle-ci par un bus de données, l'adressage des éléments périphériques se faisant sur la longueur de mot différente des données et les éléments périphériques possédant une mémoire de réception (6, 7) et un décodeur d'adresse ainsi qu'une mémoire de travail et une mémoire de réponse chacun à partir desquelles des données arrivent à l'unité de commande en provenance de l'élément périphérique adressé en passant par les mêmes conduites de données du même bus de données, caractérisé en ce qu'un signal de commande pour la préparation de la circulation de données de l'élément périphérique adressé vers l'unité de commande (1) est dérivé directement par le décodeur d'adresse (8, 9) de l'élément périphérique adressé (2, 5), signal qui ne libère la mémoire de réponse (14, 15) qu'en coïncidence avec un signal de commande (EN) donné par l'unité de commande (1) et que la longueur du signal de commande (EN) pour la commande de la durée de la circulation de données vers l'unité de commande (1) est variable.

Fig. 1

Fig.2

Richtung

Fig.3

Richtung

EP 0 154 774 B1

Fig. 4